# EUROPÄISCHE PATENTSCHRIFT

(11) **EP 1 010 991 B1**
(45) Veröffentlichungstag und Bekanntmachung des Hinweises auf die Patenterteilung: **27.09.2006**
(21) Anmeldenummer: 99122594.7
(22) Anmeldetag: 12.11.1999
(51) Int. Cl.: G01V 3/10

(54) **Torsonde**
Gate detector
Portique de détection

(30) Priorität: 18.12.1998 DE 19858714
(43) Veröffentlichungstag der Anmeldung: 21.06.2000
(73) Patentinhaber: Ebinger, Klaus, D-51149 Köln (DE)
(72) Erfinder: Ebinger, Klaus, Ing., 51149 Köln (DE)
(74) Vertreter: Heim, Hans-Karl

(56) Entgegenhaltungen:
- DE-A- 1 623 104
- DE-U- 29 904 326
- FR-A- 2 553 523
- FR-A- 2 619 454
- US-A- 605 898
- US-A- 4 016 553

## Beschreibung

Die Erfindung betrifft eine Torsonde mit mindestens einem Sender, welcher ein Magnetfeld erzeugt, und mindestens einem Empfänger, wobei die Anwesenheit metallischer Gegenstände über eine Veränderung des Magnetfeldes nachweisbar ist.

In der US-A-4,605,898 ist eine gattungsgemäße Vorrichtung beschrieben. Sowohl der Sender als auch der Empfänger sind als Spulensystem verwirklicht und in einer speziellen Weise angeordnet. Die Spulen werden von einem Rahmen getragen. Ferner sind sie durch Schutzplatten gegen einen Zugriff von außen geschützt. Der Rahmen sowie die Schutzplatten bilden das eigentliche Tor, so daß Gegenstände, welche durch das Tor hindurchgeführt werden, durch die von dem Rahmen getragenen Spulen nachgewiesen werden können.

Bei derartigen Torsonden besteht ein wesentlicher Kostenfaktor im äußeren Aufbau, d.h. - bezogen auf das beschriebene Beispiel - in der Notwendigkeit eines Rahmens sowie der genannten Schutzplatten. Damit ist auch verbunden, daß eine Herstellung der gattungsgemäßen Torsonden "aus einer Hand" in der Regel nicht möglich sein wird, da elektronisch bzw. elektromechanisch orientierte Unternehmen in der Regel über keine Erfahrungen im Bereich der Holz- oder Kunststoffverarbeitung verfügen. Die Rahmen- und Schutzkonstruktionen sind aber in der Regel aus solchen Materialien aufgebaut.

Ähnlich verhält es sich in verwandten technischen Bereichen, wie aus der DE 195 03 896 A1 ersichtlich ist. Die dort offenbarte Vorrichtung betrifft die Detektion eines mit einem elektronischen Sicherungselement versehenen Artikels in einer Überwachungszone, etwa im Ausgangsbereich eines Warenhauses. Auch hier sind die Detektionsspulen in einem sog. Gatter angeordnet, was die oben beschriebenen Kostennachteile sowie die Schwierigkeiten bei der Fertigung der Vorrichtung mit sich bringt.

Ähnliche Vorrichtungen zur Markerdetektion sind aus FR-A-2553523 und US-A-4016553 bekannt.

In der DE-A-1623104 ist ein Spulensystem zur Überwachung eines Produktionsprozesses auf das Vorhandensein von metallischen Körpern beschrieben. Hierbei werde Spulen verwendet, die aus einem Flachbandmaterial bestehen und nur eine Wicklung aufweisen. Die einzelnen Spulen sind untereinander mit Distanzstücken befestigt.

Der Erfindung liegt somit die **Aufgabe** zugrunde, die genannten Nachteile zu beseitigen; insbesondere soll ein kostengünstiges, gut handhabbares System zur Verfügung gestellt werden, welches durch einheitliche Fertigungstechniken herstellbar ist.

Diese Aufgabe wird mit den Merkmalen von Anspruch 1 gelöst.

Danach ist die gattungsgemäße Vorrichtung dadurch weitergebildet, daß der Sender und/oder der Empfänger als im wesentlichen selbsttragende Metallkonstruktion ausgebildet ist/sind. Damit ist die Funktion der Sende- bzw. Empfangsspulen sowie des Tragerahmens bzw. von Schutzabdeckungen in integrierter Form realisiert. Die Metallkonstruktion bietet die erforderlichen Sende- und Empfangsfunktionen und kann gleichzeitig die notwendige mechanische Stabilität zur Verwendung als Torsonde ohne weitere Hilfsaufbauten aufbringen.

Erfindungsgemäß ist die Metallkonstruktion zerlegbar. Durch diesen Umstand wird die Auslieferung sowie die Anlieferung der erfindungsgemäßen Torsonde erheblich erleichtert. Ferner senkt die Zerlegbarkeit und das dadurch bedingte verringerte Packmaß die Lagerkosten. Aufgrund der Zerlegbarkeit ist es weiterhin denkbar, daß die Torsonde an wechselnden Einsatzorten Verwendung findet; insbesondere in der heutigen Zeit ist es bei den verschiedensten Veranstaltungen zunehmend erforderlich, strenge Sicherheitsvorkehrungen, beispielsweise gegen Kriminalität und Terrorismus, zu treffen.

Vorteilhafterweise ist auf die Metallkonstruktion mindestens ein Ringkern aufgesetzt. Mit einem solchen Ringkern, welcher über eine Wicklung verfügt, wird die Metallkonstruktion besendet. Ebenfalls kann das empfangene Signal über den Ringkern an der Metallkonstruktion abgenommen werden. Es kann ein einzelner Ringkern vorgesehen sein, welcher sowohl die Sendefunktion als auch, über die Impedanzänderung des Rahmens, die Empfangsfunktion vermittelt. Ebenfalls können unter Verwendung mehrerer Ringkerne Sende- und Empfangsfunktionen voneinander getrennt werden.

Bevorzugt weist die Metallkonstruktion einzelne Rohrelemente auf. Damit ist ein stabiler und schneller Aufbau der Metallkonstruktion möglich. Ferner sind Metallrohre kostengünstig und in praktisch beliebigen Ausführungen auf dem Markt erhältlich. Es sind Rundrohre, Vierkantrohre oder auch beliebige andere Metallprofile zum Herbeiführen der erfindungsgemäßen Vorteile einsetzbar.

Vorzugsweise weist die Metallkonstruktion einzelne mechanische Verbindungselemente auf. Damit können die den Rahmen bildenden Elemente, beispielsweise die Rohrelemente, in zuverlässiger Weise miteinander verbunden werden. Es wird ein modularer und damit variabler Aufbau der Torsonde ermöglicht.

Besonders vorteilhaft ist es, wenn die Verbindungselemente elektrisch leitfähig sind. Durch diesen Umstand bieten die Verbindungselemente neben der mechanischen Verbindung gleichzeitig die elektrische Verbindung der Konstruktionselemente, so daß die erforderliche Sende- bzw. Empfangsinduktivität zur Verfügung gestellt wird.

Bevorzugt sind die Rohrelemente endseitig mit Verbindungsstücken versehen, über welche sie mit den Verbindungselementen verbunden sind. Diese Verbindungsstücke, welche beispielsweise aus Aluminium-Vollmaterial gefertigt sind, bieten die Möglichkeit, die Rohre an die Gestalt der Verbindungselemente anzupassen.

Das Vorsehen der Verbindungsstücke ist besonders vorteilhaft, wenn diese über eine Schraubklemmung mit den Verbindungselementen verbunden sind. Beispielsweise werden die Verbindungsstücke in Löcher, welche in den Verbindungselementen vorgesehen sind, eingeführt, und eine Schraube wird senkrecht zur Lochachse zur Verklemmung der Verbindungsstücke in das entsprechende Verbindungselement eingeschraubt.

Dabei weisen die Verbindungsstücke bevorzugt eine Senkung zur verdrehsicheren Schraubklemmung auf. Die Senkung, in welche die klemmende Schraube kraft- und/oder formschlüssig eingreifen sollte, verhindert einerseits das unbeabsichtigte Austreten des Verbindungsstückes aus dem Verbindungselement, gibt weiterhin einen verdrehsicheren Halt und definiert ferner die exakte Position des Verbindungsstückes und damit des Elementes der Metallkonstruktion im Verbindungselement.

Ebenfalls kann dabei besonders vorteilhaft sein, wenn die Verbindungsstücke eine Nut aufweisen, in welche die Schraubklemmung eingreift. Wenn diese Nut als um das zylindrische Verbindungsstück umlaufende Nut ausgebildet ist, so erleichtert dies die Montage der Torsonde, da das Rohr in beliebig gedrehter Position in dem Verbindungselement festsetzbar ist. Die Sicherung des Rohres gegen das unbeabsichtigte Herausrutschen aus dem Verbindungselement sowie die exakte Positionsfestlegung sind durch die Nut ebenfalls gewährleistet.

Bevorzugt ist die Impedanz der durch die Metallkonstruktion bereitgestellten Induktivität durch in der Umgebung der Metallkonstruktion vorhandene Metallobjekte veränderbar. Durch Realisierung dieses bewährten Meßprinzips kann die Torsonde zuverlässig arbeiten und somit die erforderliche Sicherheit garantieren.

Es kann vorteilhaft sein, wenn Empfänger und Sender symmetrisch aufgebaut sind. Ein solcher symmetrischer Aufbau kann durch die Umkehrbarkeit des Systems realisiert werden. Mit anderen Worten: der Sender kann ebenfalls als Empfänger arbeiten und umgekehrt.

Bevorzugt sind die Induktionsänderungen des Senders und des Empfängers auswertbar, und man hat somit zwei Signale zur Verfügung. Folglich erreicht man eine Verbesserung der Meßgenauigkeit.

Vorzugsweise ist in diesem Zusammenhang zur Verarbeitung der aus den Induktionsänderungen resultierenden Signale eine Differenzstufe vorgesehen. Auf diese Weise können Störamplituden, die entgegengesetzt gleich auf die Meßeingänge der Differenzstufe einwirken, in weiten Grenzen eliminiert werden.

Bevorzugt besteht die Metallkonstruktion aus Aluminium. Damit weist sie eine ausreichende Leitfähigkeit auf; ferner ist Aluminium als Leichtmetall beim Transport als auch beim Aufbau der Konstruktion vorteilhaft.

Der/die Ringkern(e) ist/sind bevorzugt sinus- oder pulsförmig erregbar. Beide dieser bekannten Detektionsverfahren sind im Rahmen der Erfindung in vorteilhafter Weise einsetzbar.

Besonders vorteilhaft kann sein, wenn die Metallkonstruktion die Konfiguration einer "Acht" aufweist. Eine derartige Anordnung hat eine kompensierende Wirkung, da die Amplituden der Störsignale dann entgegengesetzt gleichwirkend sind und sich auf diese Weise zum großen Teil aufheben.

Die Metallkonstruktion kann vorzugsweise Kunststoffrohrelemente aufweisen. Dies ist nützlich, wenn beispielsweise eine Isolierung zwischen der Sender- und der Empfängerseite erwünscht ist.

Der Erfindung liegt die überraschende Erkenntnis zugrunde, daß durch die Ausbildung einer Torsonde als selbsttragende Metallkonstruktion eine kostengünstige und den praktischen Bedürfnissen angepaßte, überaus wirkungsvolle Lösung bereitgestellt ist. Es entfallen die Nachteile einer aufwendigen Trag- und Schutzkonstruktion für die Sende- bzw. Empfangsspulen. Durch die vorteilhafte Zerlegbarkeit und den Aufbau durch Rohre und Verbindungselemente steht ein modulares System zur Verfügung, welches variabel und allenorts einsetzbar ist.

Die vorliegende Erfindung wird nun beispielhaft mit Bezug auf die begleitenden Zeichnungen anhand bevorzugter Ausführungsformen beschrieben. Dabei zeigt:
- Fig.: 1 eine Explosionsdarstellung einer ersten Ausführungsform der vorliegenden Erfindung;
- Fig. 2: eine Explosionsdarstellung zur Erläuterung der Funktion eines Verbindungselementes;
- Fig. 3: eine Explosionsdarstellung einer zweiten Ausführungsform der Erfindung;
- Fig. 4: eine Explosionsdarstellung einer dritten Ausführungsform der Erfindung;
- Fig. 5: eine Explosionsdarstellung einer vierten Ausführungsform der Erfindung;
- Fig. 6: eine Explosionsdarstellung einer fünften Ausführungsform der Erfindung; und
- Fig. 7: eine Explosionsdarstellung einer sechsten Ausführungsform der Erfindung.

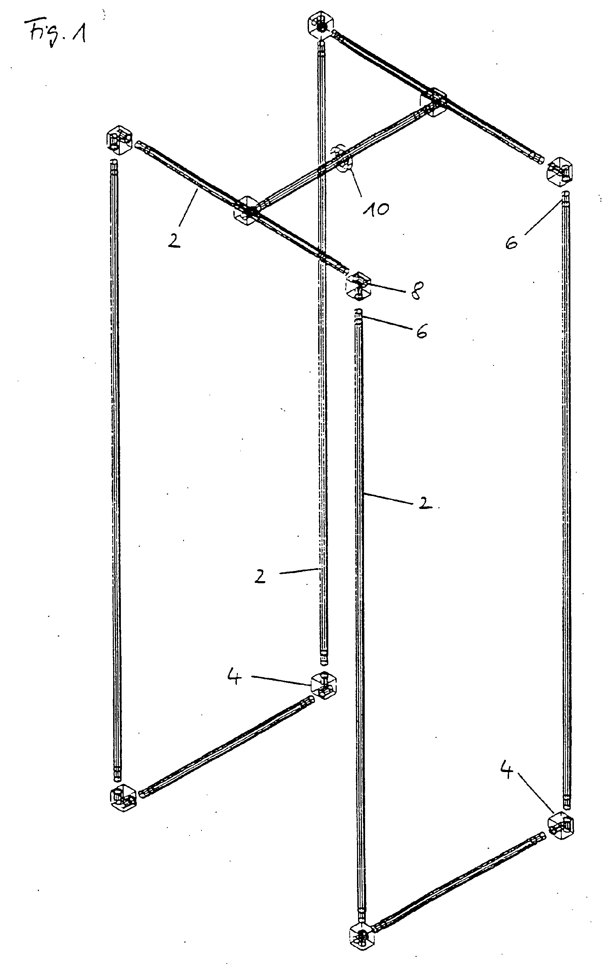

Fig. 1 zeigt den Aubau einer Torsonde, welche aus Rohrelementen 2 zusammengesetzt ist. Die Rohrelemente 2 sind über Verbindungselemente 4 miteinander zu verbinden. Endseitig weisen die Rohrelemente 2 Verbindungsstücke 6 auf, über welche sie mit den Verbindungselementen 4 verbunden werden können. Zu diesem Zweck sind in den Verbindungselementen 4 zylindrische Löcher 8 vorgesehen. Eines der Rohrelemente 2 trägt einen Ringkern 10 aus Eisen zum Besenden des Rahmens.

Mit dieser Anordnung kann die erfindungsgemäße Torsonde nach dem Dämpfungsprinzip arbeiten. Der Ringkern 10 ist Bestandteil eines Oszillatorschwingkreises, der in das aus den Rohrelementen 2 bestehende Rohrsystem einen Strom induziert. Der metallische Rahmen wirkt als Induktivität, deren Impedanz sich durch Metallobjekte, die durch den Rahmen geführt werden, verändert. Die somit entstehende Amplitudenänderung kann als Signalwert aufgenommen und beispielsweise zu einem Alarmton umgesetzt werden.

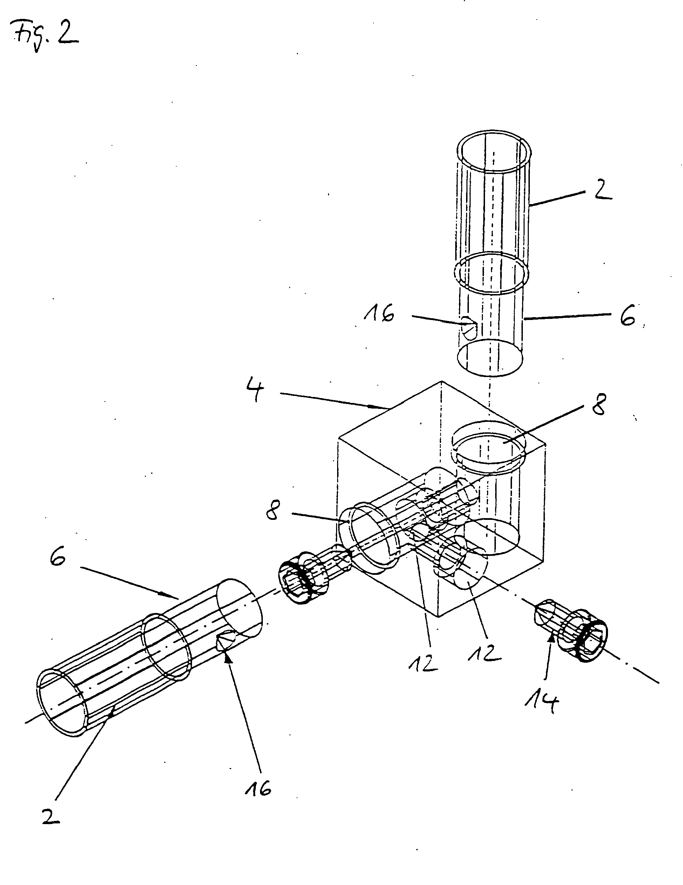

Fig. 2 zeigt in Explosionsdarstellung ein Verbindungselement 4 sowie die Enden zweier Rohrelemente 2 mit entsprechenden Verbindungsstücken 6. Das Verbindungselement 4 weist vier Bohrungen 8, 12 auf. Zwei der Bohrungen 8, welche im vorliegenden Beispiel als die größeren Bohrungen 8 ausgelegt sind, dienen der Aufnahme der Verbindungsstücke 6 der Rohrelemente 2. Die kleineren Bohrungen 12 sind mit einem Innengewinde versehen und zur Aufnahme von Schrauben 14 ausgelegt. Wird nun ein Rohrelement 2 mit seinem Verbindungsstück 6 in die entsprechende Bohrung 8 des Verbindungselements 4 eingeführt, so kann das Rohrelement 2 bzw. das Verbindungsstück 6 von der Seite durch die klemmende Wirkung der entsprechenden Schraube 14 festgelegt werden. Diese wird zu dem genannten Zweck in das entsprechende Bohrloch 12 eingeschraubt. Im vorliegenden Beispiel laufen die Spitzen der Schrauben 14 in einem Winkel von ca. 90 kegelig aus. Auf diese Weise finden sie einen form- und/oder kraftschlüssigen Sitz in der entsprechend ausgebildeten Senkung 16 in den Verbindungsstücken 6 der Rohrelemente 2. Die Rohrelemente 2 bzw. die Verbindungsstücke 6 sind auf diese Weise gegen Herausrutschen aus den Verbindungselementen 4 und ferner gegen Verdrehung in den Bohrungen 8 gesichert.

In einer weiteren, hier nicht dargestellten Ausführungsform kann anstelle der Senkung 16 - oder auch zusätzlich an einer anderen Stelle des Verbindungsstückes 6 - eine zumindest teilweise umlaufende Nut vorgesehen sein. Dies erleichtert den Zusammenbau von Rohrelementen 2 und Verbindungselementen 4, da nicht mehr auf die relative Drehung der Rohrelemente geachtet werden muß. Eine Sicherung gegen Herausrutschen wird von den Nuten gleichwohl bereitgestellt.

Selbstverständlich kann unter Umständen auch auf die an den Rohrelementen 2 endseitig vorgesehenen Verbindungsstücke 6 verzichtet werden. Die Rohrelemente 2 werden dann direkt in den Verbindungselementen 4 eingeklemmt.

Besonders zu erwähnen ist, daß durch die vorgeschlagene Konstruktion der Verbindungselemente 4 eine ausreichend leitfähige Verbindung zwischen den Rohrelementen 2 ermöglicht werden kann, so daß ein funktionsfähiges Sondensystem verwirklicht ist.

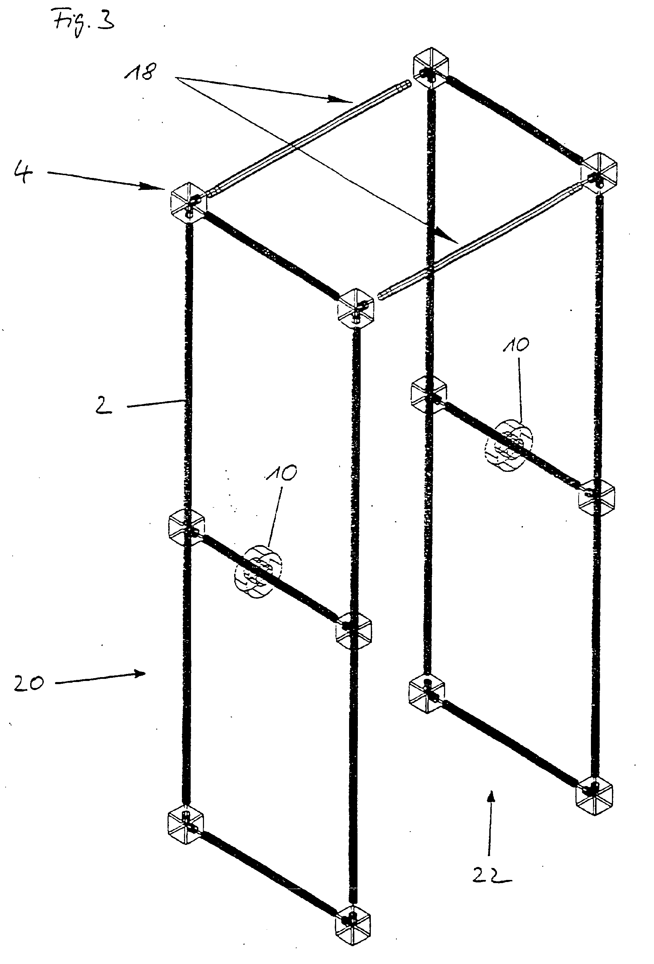

Anhand von Fig. 3 wird eine zweite Ausführungsform der Erfindung erläutert. Neben den aus Metall bestehenden Rohrelementen 2 sind im Kopfbereich der Torsonde Kunststoffrohre 18 vorgesehen. Diese sind elektrisch isolierend, so daß jede Seite 20, 22 der Torsonde, welche jeweils mit einem Ringkern 10 bestückt ist, als separater, elektrisch geschlossener Sende- und Empfangskreis arbeitet. Weiterhin sind in der Darstellung der Fig. 3 wiederum die Verbindungselemente 4 dargestellt.

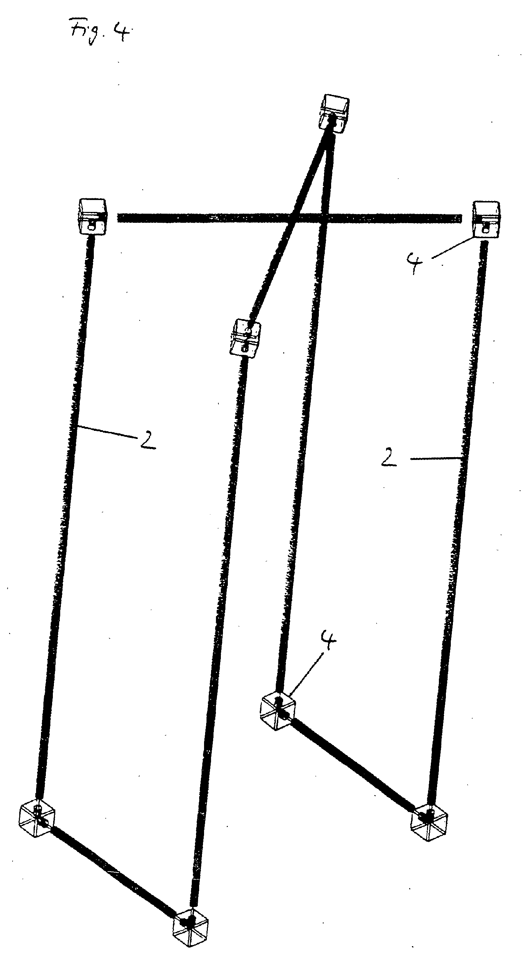

In Fig. 4 ist eine dritte Ausführungsform der Erfindung veranschaulicht. Hier sind die metallischen Rohrelemente 2 und die Verbindungselemente 4 so angeordnet, daß die kompensierende Konfiguration einer "Acht" realisiert ist. Die Amplituden von Störsignalen wirken auf diese Weise entgegengesetzt gleich und heben sich damit zu großen Teil auf. Ein Ringkern kann auch bei diesem Ausführungsbeispiel an geeigneter Stelle eines Rohrelementes 2 des Rohrsystems plaziert werden. Auch bei dieser speziellen Anordnung sind dieselben Verbindungselemente 4 einsetzbar wie bei den anderen Ausführungsformen der Erfindung.

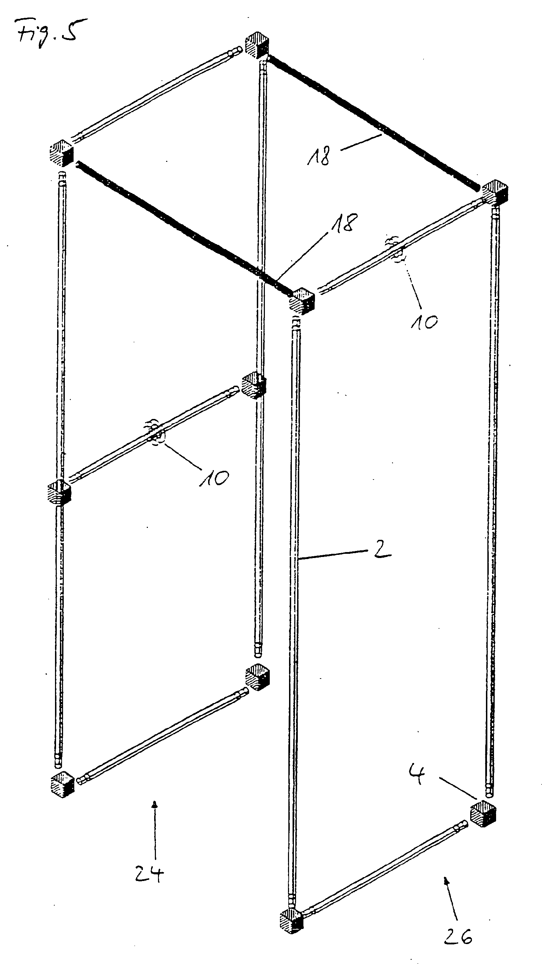

Eine vierte Ausführungsform der Erfindung ist in Fig. 5 dargestellt. Wiederum sind zwei Seiten 24, 26 der Torsonde durch Kunststoffrohre 18 elektrisch gegeneinander isoliert. Auf den metallischen Rohrelementen 2 sind Ringkerne 10 für jede Seite 24, 26 der Torsonde angeordnet. Dabei ist selbstverständlich jede ähnliche Anordnung von Ringkernen 10, welche im allgemeinen schlicht über die Rohrelemente 2 geschoben werden, denkbar.

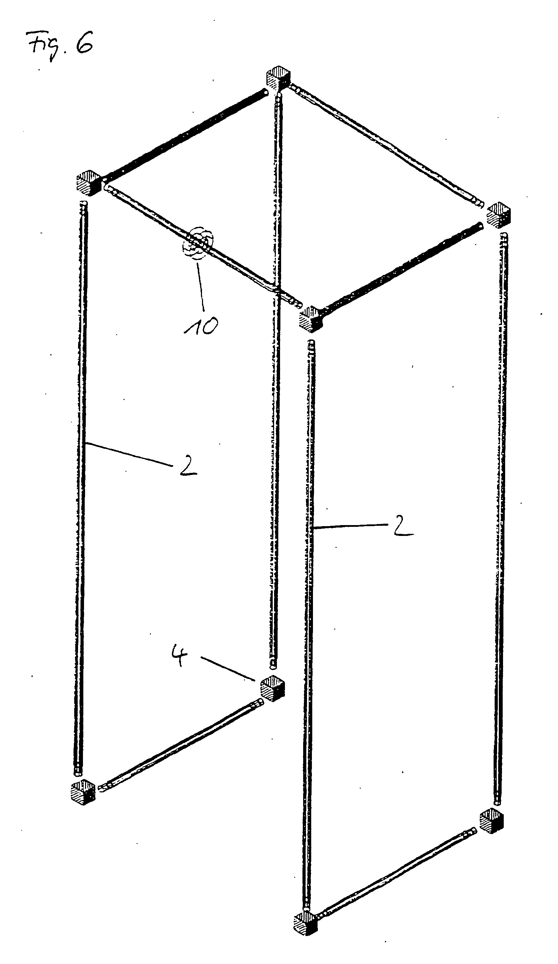

Fig. 6 zeigt eine weitere Variante der Anordnung von Rohrelementen 2, Verbindungselementen 4, Kunststoffrohrelementen 18 und einem Ringkern 10. Der Ringkern 10 ist hier über ein Rohrelement 2 im Kopfteil der Torsonde geschoben.

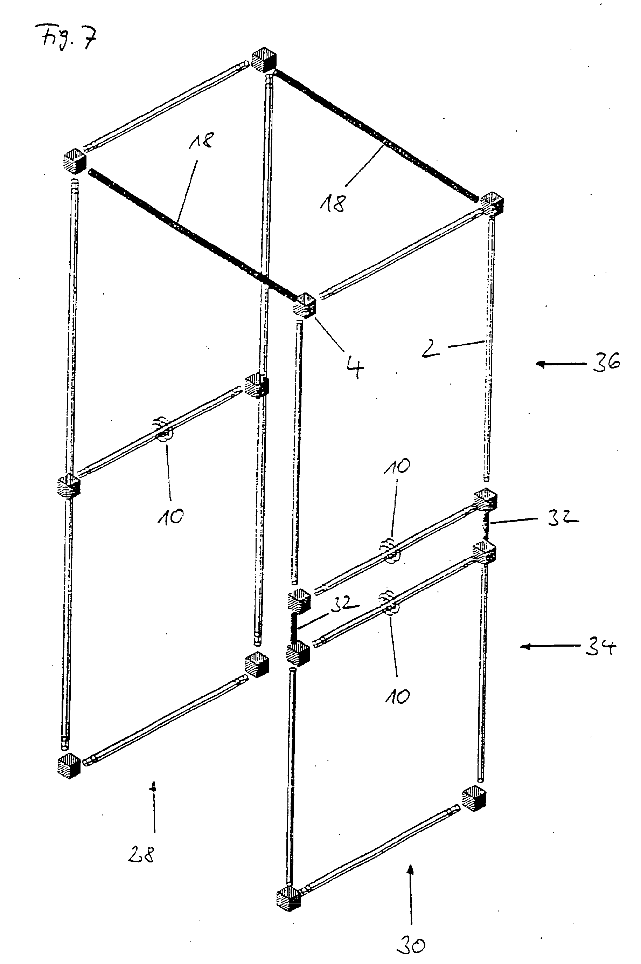

Eine sechste Ausführungsform der vorliegenden Erfindung ist in Fig. 7 dargestellt. Die Torsonde ist wiederum durch Kunststoffrohre 18 in zwei Seiten 28, 30 unterteilt. Die rechte Seite 30 der Torsonde ist dabei nochmals durch kürzere Kunststoffrohre 32 in zwei gegeneinander isolierte Abschnitte 34, 36 aufgeteilt. Jeder der Abschnitte 28, 34, 36 trägt je einen Ringkern 10. Mit der vorliegenden Anordnung wird vorzugsweise so verfahren, daß der Abschnitt 28 als Sender verwendet wird, während die Abschnitte 34 und 36 zum gegenphasigen Empfang verschaltet werden. Auf diese Weise kann das Sendesignal kompensiert werden. Auch diese Anordnung ist im Hinblick auf die Sende- und Empfangseigenschaft umkehrbar.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Torsonde mit
- mindestens einem Sender, welcher ein Magnetfeld erzeugt,
- und mindestens einem Empfänger,
- wobei die Anwesenheit metallischer Gegenstände über eine Veränderung des Magnetfeldes nachweisbar ist, der Sender und/oder der Empfänger als im wesentlichen selbsttragende Metallkonstruktion (2, 4, 6, 8) ausgebildet ist/sind, **dadurch gekennzeichnet,**
- **daß** die Metallkonstruktion zerlegbar ausgebildet ist.

2. Torsonde nach Anspruch 1,
**dadurch gekennzeichnet,**
**daß** die Metallkonstruktion (2, 4, 6, 8) einzelne Rohrelemente (2) aufweist.

3. Torsonde nach Anspruch 1 oder 2,
**dadurch gekennzeichnet,**
**daß** auf die Metallkonstruktion (2, 4, 6, 8) mindestens ein Ringkern (10) aufgesetzt ist.

4. Torsonde nach einem der Ansprüche 1 bis 3,
**dadurch gekennzeichnet,**
**daß** die Metallkonstruktion (2, 4, 6, 8) einzelne elektrisch leitfähige, mechanische Verbindungselemente (4) aufweist.

5. Torsonde nach Anspruch 4,
**dadurch gekennzeichnet,**
**daß** die Rohrelemente (2) endseitig mit Verbindungsstücken (6) versehen sind, über welche sie mit den Verbindungselementen (4) über eine Schraubklemmung (12, 14) verbunden sind.

6. Torsonde nach Anspruch 5,
**dadurch gekennzeichnet,**
**daß** die Verbindungsstücke (6) eine Senkung (16) zur verdrehsicheren Schraubklemmung aufweisen.

7. Torsonde nach einem der Ansprüche 5 oder 6,
**dadurch gekennzeichnet,**
**daß** die Verbindungsstücke (6) eine Nut aufweisen, in welche die Schraubklemmung eingreift.

8. Torsonde nach einem der vorhergehenden Ansprüche,
**dadurch gekennzeichnet,**
**daß** die Impedanz der durch die Metallkonstruktion (2, 4, 6, 8) bereitgestellten Induktivität durch in der Umgebung der Metallkonstruktion (2, 4, 6, 8) vorhandene Metallobjekte veränderbar ist.

9. Torsonde nach einem der vorhergehenden Ansprüche,
**dadurch gekennzeichnet,**
**daß** Empfänger und Sender symmetrisch aufgebaut sind.

10. Torsonde nach einem der vorhergehenden Ansprüche,
**dadurch gekennzeichnet,**
**daß** die Induktionsänderungen des Senders und des Empfängers auswertbar sind, wobei zur Verarbeitung der aus den Induktionsänderungen resultierenden signale eine Differenzstufe vorgesehen ist.

11. Torsonde nach einem der vorhergehenden Ansprüche,
**dadurch gekennzeichnet,**
**daß** die Metallkonstruktion (2, 4, 6, 8) aus Aluminium besteht.

12. Torsonde nach einem der Ansprüche 3 bis 11,
**dadurch gekennzeichnet,**
**daß** der/die Ringkern(e) sinusförmig erregbar ist/sind.

13. Torsonde nach einem der Ansprüche 3 bis 11,
**dadurch gekennzeichnet,**
**daß** der/die Ringkern(e) pulsförmig erregbar ist/sind.

14. Torsonde nach einem der vorhergehenden Ansprüche,
**dadurch gekennzeichnet,**
**daß** die Metallkonstruktion (2, 4, 6, 8) die Konfiguration einer "Acht" aufweist.

15. Torsonde nach einem der vorhergehenden Ansprüche,
**dadurch gekennzeichnet,**
**daß** die Metallkonstruktion (2, 4, 6, 8) Kunststoffrohrelemente (18, 32) aufweist.

## Claims

1. Gate detector with
- at least one transmitter producing a magnetic field and
- at least one receiver,
- the presence of metallic objects being detectable via a change in the magnetic field,
- the transmitter and/or the receiver being constructed as a substantially self-supporting metal structure (2, 4, 6, 8),
**characterized in that**
- the metal structure is constructed in dismantlable manner.

2. Gate detector according to claim 1,
**characterized in that**
the metal structure (2, 4, 6, 8) has individual tubular elements (2).

3. Gate detector according to claim 1 or 2,
**characterized in that**
at least one toroidal core (10) is placed on the metal structure (2, 4, 6, 8).

4. Gate detector according to one of the claims 1 to 3,
**characterized in that**
the metal structure (2, 4, 6, 8) has individual, electrically conductive, mechanical connecting elements 4).

5. Gate detector according to claim 4,
**characterized in that**
the tubular elements (2) are terminally provided with connectors (6) by means of which they are connected to the connecting elements (4) via a screw clamping (12, 14) .

6. Gate detector according to claim 5,
**characterized in that**
the connectors (6) have a depression (16) for the twisting-preventing screw clamping.

7. Gate detector according to one of the claims 5 or 6,
**characterized in that**
the connectors (6) have a groove in which engages the screw clamping.

8. Gate detector according to one of the preceding claims,
**characterized in that**
the impedance of the inductor provided by the metal structure (2, 4, 6, 8) is variable by metal objects located in the vicinity of the metal structure (2, 4, 6, 8).

9. Gate detector according to one of the preceding claims,
**characterized in that**
the receiver and transmitter are symmetrically constructed.

10. Gate detector according to one of the preceding claims,
**characterized in that**
the induction changes of transmitter and receiver are evaluatable, a differential stage being provided for processing the signals resulting from the inductance changes.

11. Gate detector according to one of the preceding claims,
**characterized in that**
the metal structure (2, 4, 6, 8) is made from aluminium.

12. Gate detector according to one of the claims 3 to 11,
**characterized in that**
the toroidal core(s) are sinusoidally excitable.

13. Gate detector according to one of the claims 3 to 11,
**characterized in that**
the toroidal core(s) are excitable in pulse-like manner.

14. Gate detector according to one of the preceding claims,
**characterized in that**
the metal structure (2, 4, 6, 8) has a figure of eight configuration.

15. Gate detector according to one of the preceding claims,
**characterized in that**
the metal structure (2, 4, 6, 8) has plastic tubular elements (18, 32).

## Revendications

1. Portique de détection comportant:
- au moins un émetteur générant un champ magnétique,
- et au moins un récepteur,
- la présence d'objets métalliques se prouvant par variation du champ magnétique,
- l'émetteur et/ou le récepteur constitué par une construction métallique (2, 4, 6, 8) essentiellement autoporteuse,
**caractérisé en ce que**
la construction métallique est démontable.

2. Portique de détection selon la revendication 1,
**caractérisé en ce que**
la construction métallique (2, 4, 6, 8) est formée d'éléments tubulaires (2).

3. Portique de détection selon la revendication 1 ou 2,
**caractérisé en ce que**
la construction métallique (2, 4, 6, 8) porte au moins un anneau en fer (10).

4. Portique de détection selon l'une des revendications 1 à 3,
**caractérisé en ce que**
la construction métallique (2, 4, 6, 8) comporte des éléments de liaison mécaniques (4) séparément électroconducteurs.

5. Portique selon la revendication 4,
**caractérisé en ce que**
les éléments tubulaires (2) sont munis en extrémité de pièces de liaison (6) par lesquelles ils sont reliés aux éléments de liaison (4) par un serrage par vis (12, 14).

6. Portique selon la revendication 5,
**caractérisé en ce que**
les pièces de liaison (6) comportent une cavité (16) pour le blocage en rotation par serrage par vis.

7. Portique selon l'une des revendications 5 ou 6,
**caractérisé en ce que**
les pièces de liaison (6) ont une rainure dans laquelle pénètre la vis de serrage.

8. Portique selon l'une des revendications précédentes,
**caractérisé en ce que**
l'impédance de l'inductivité de la construction métallique (2, 4, 6, 8) peut être modifiée par des objets métalliques présents dans l'environnement de la construction métallique (2, 4, 6, 8).

9. Portique selon l'une des revendications précédentes,
**caractérisé en ce que**
le récepteur et l'émetteur sont construits de manière symétrique.

10. Portique selon l'une des revendications précédentes,
**caractérisé en ce que**
les variations d'induction de l'émetteur et du récepteur sont exploitées et un étage différentiel traite les signaux résultant des variations d'induction.

11. Portique selon l'une des revendications précédentes,
**caractérisé en ce que**
la construction métallique (2, 4, 6, 8) est en aluminium.

12. Portique selon l'une des revendications 3 à 11,
**caractérisé en ce que**
le ou les noyaux annulaires sont excités par un signal sinusoïdal.

13. Portique selon l'une des revendications 3 à 11,
**caractérisé en ce que**
le ou les noyaux annulaires sont excités de manière impulsionnelle.

14. Portique selon l'une quelconque des revendications précédentes,
**caractérisé en ce que**
la construction métallique (2, 4, 6, 8) a une forme de « huit ».

15. Portique selon l'une quelconque des revendications précédentes,
**caractérisé en ce que**
la construction métallique (2, 4, 6, 8) comporte des éléments tubulaires (18, 32) en matière plastique.
